# EUROPEAN PATENT APPLICATION

(11) **EP 4 643 626 A1**
(43) Date of publication of application: **05.11.2025**
(21) Application number: 23911442.4
(22) Date of filing: 17.11.2023
(51) Int. Cl.: A01B 69/04, A01B 69/00

(54) **REGION RECOGNITION SYSTEM AND WORK VEHICLE**

(30) Priority: 26.12.2022 JP 2022208091
(71) Applicant: Kubota Corporation, Osaka 556-8601 (JP)
(72) Inventor: MATSUMOTO, Shogo, Sakai-shi, Osaka 590-0908 (JP)
(74) Representative: Cabinet Beau de Loménie
(86) International application number: PCT/JP2023/041544
(87) International publication number: WO 2024/142660

(57) **Abstract**

An area recognition system includes: a first discrimination processor configured to discriminate whether an area is a road based on first information obtained by setting the surrounding area of a work vehicle 10 as a detection target; and a second discrimination processor configured to discriminate between a road and a non-road area by using identification information on a height or a width based on second information obtained for a range overlapping a range discriminated by using the first information.

## Description

### TECHNICAL FIELD

The present invention relates to an area recognition system and a work vehicle. The present application claims priority based on Japanese Patent Application No. 2022-208091 filed on December 26, 2022, the entire contents of which are incorporated herein by reference.

### BACKGROUND ART

PATENT LITERATURE 1 discloses a work vehicle that acquires surrounding information and works using the information. The work vehicle includes a three-dimensional scanner, a camera, and a controller. The controller processes information acquired from the three-dimensional scanner and the camera, and the work vehicle performs various kinds of work at a work site.

### CITATION LIST

### [PATENT LITERATURE]

PATENT LITERATURE 1: US Patent Application Publication No. 2022-180131

### SUMMARY OF THE INVENTION

An area recognition system according to one aspect of the present disclosure includes: a first discrimination processor configured to discriminate whether an area of a work vehicle is a road based on first information obtained by setting a surrounding area of a work vehicle as a detection target; and a second discrimination processor configured to discriminate between a road and a non-road area by using identification information related to a height or a width based on second information obtained for a range overlapping a range discriminated by using the first information.

### BRIEF DESCRIPTION OF DRAWINGS

FIG. 1 is a side view illustrating an aspect of a work vehicle.
FIG. 2 is a block diagram illustrating a system configuration of the work vehicle.
FIG. 3 is an image diagram illustrating an example of an image information obtained by a camera.
FIG. 4 is an image diagram illustrating an example of a three-dimensional point group data set obtained by a LiDAR sensor.
FIG. 5 is a flowchart illustrating an example of processing performed by an area recognition system.
FIG. 6 is an explanatory diagram of discrimination processing by the second discrimination processor.
FIG. 7 is an explanatory diagram of discrimination processing by a second discrimination processor.
FIG. 8 is an explanatory diagram of discrimination processing by the second discrimination processor.
FIG. 9 is an explanatory diagram of discrimination processing by the second discrimination processor.

### DETAILED DESCRIPTION

### <Problems to be Solved by Present Disclosure>

Development of a technique for performing self-driving of a work vehicle is in progress. The self-driving is performed not only in the workplace but also on a road toward the workplace. In order to control self-driving, it is necessary to discriminate a road from non-road areas. The discrimination is performed by processing image information captured by an in-vehicle camera or the like. A non-road area may be, for example, land such as a farm field (workplace).

For example, in the case of a work vehicle that performs agricultural work, it may be difficult to discriminate a road on which weeds have grown from a farm field (non-road area) that is uncultivated only by information processing using image information captured by an in-vehicle camera or the like. When a work vehicle travels on a road, the work vehicle wobbles due to, for example, irregularities of a road surface, and the in-vehicle camera suddenly faces the farm field, the road and the farm field (non-road area) may be erroneously recognized at that timing. In this case, it is also conceivable that the self-driving is interrupted.

Therefore, the present disclosure provides an area recognition system capable of improving the accuracy of discrimination between a road and a non-road area, and a work vehicle including the area recognition system.

### <Effects of the Present Disclosure>

According to the invention of the present disclosure, it is possible to improve the accuracy of discrimination between a road and a non-road area.

### <Outline of Embodiment of Present Disclosure>

Hereinafter, outlines of an embodiment of the present disclosure will be listed and described.
(1) An area recognition system according to the present embodiment includes: a first discrimination processor configured to discriminate whether an area is a road based on first information obtained by setting a surrounding area of a work vehicle as a detection target; and a second discrimination processor configured to discriminate between a road and a non-road area by using identification information on a height or a width based on second information obtained for a range overlapping a range discriminated by using the first information.
   According to the area recognition system, for example, even if the first discrimination processor discriminates that the area is a road, the second discrimination processor can re-discriminate that the area is a non-road area.
(2) It is preferable that the first discrimination processor discriminate whether the area is a road by using a trained model based on the first information.
   The first discrimination processor can discriminate whether the area is a road by using the trained model based on the first information obtained by setting the surrounding area of the work vehicle as the detection target.
(3) The first information and the second information may be the same information, and the first information and the second information may be different from each other.
(4) In the area recognition system according to any one of (1) to (3), it is preferable that the area recognition system further include an information acquisition part configured to acquire the identification information, and when the identification information satisfies a discrimination condition related to a height or a width, the second discrimination processor discriminate that a portion discriminated as a road by the first discrimination processor is a non-road area.

According to this configuration, even when the first discrimination processor discriminates that the area is a road, the second discrimination processor can re-discriminate that the portion discriminated as a road by the first discrimination processor is a non-road area when the identification information satisfies the discrimination condition related to a height or a width.

(5) For example, as a relationship between a farm field and a road adjacent to the farm field, the ground surface of land of a non-road area such as the farm field is often lower than the ground surface (road surface) of the road by one step.

Therefore, it is preferable that the area recognition system according to (4) further include a confirmation processor capable of confirming a position where the work vehicle is present is a road, the identification information include information on a height of a portion discriminated as a road by the first discrimination processor, and the discrimination condition include a condition that a height of a portion discriminated as a road by the first discrimination processor is lower than a reference position of the work vehicle by more than a first threshold.

According to this configuration, even if the first discrimination processor discriminates that the area is a road, the second discrimination processor can re-discriminate that the area is a non-road area.

Note that, in this case, for example, the following two cases are conceivable as portions discriminated as a road by the first discrimination processor.
<1> The ground surface of the land of a non-road area where plants are not grown.
<2> A virtual plane that includes the upper ends of many relatively short plants growing on the ground.

(6) Even if the actual ground surface of the land of a non-road area has substantially the same height as the actual ground surface of a road (alternatively, even if there is a small height difference between the ground surfaces), many relatively tall plants may grow all over the land of a non-road area, and a virtual plane including the upper ends of these plants may be a portion discriminated as a road, and the first discrimination processor may discriminate that it is the road.

Therefore, it is preferable that the area recognition system of (4) further include a confirmation processor capable of confirming a position where the work vehicle is present is a road, the identification information include information on a height of a portion discriminated as a road by the first discrimination processor, and the discrimination condition include a condition that a height of a portion discriminated as a road by the first discrimination processor is higher than a reference position of the work vehicle by more than a second threshold.

According to this configuration, even if the first discrimination processor discriminates that the area is a road, the second discrimination processor can re-discriminate that the area is a non-road area.

(7) In the area recognition system according to (5) or (6), it is preferable that the confirmation processor be capable of confirming that a position where the work vehicle is present is a road by using information different from the first information and the second information or by using an algorithm different from an algorithm used by the first discrimination processor for discrimination.

(8) Even if the actual ground surface of the land of a non-road area has substantially the same height as the actual ground surface of a road (alternatively, even if there is a small height difference between the ground surfaces), many relatively tall plants may grow all over the land of a non-road area, and a virtual plane including the upper ends of these plants may be a portion discriminated as a road, and the first discrimination processor may discriminate that it is the road.

However, the upper ends of these plants (virtual plane) are not exactly on the same plane. Therefore, when an area is detected by a three-dimensional range sensor such as a LiDAR sensor, the height component of the three-dimensional point group data set varies in a portion of the area discriminated as the road.

Therefore, in the area recognition system according to (4), it is preferable that the second information include a three-dimensional point group data set in a portion discriminated as a road by the first discrimination processor, the identification information include information of a value indicating variation in a height component of a three-dimensional point group data set, and the discrimination condition include a condition that the value indicating variation exceeds a range of a third threshold.

According to this configuration, even if the first discrimination processor discriminates that the area is a road, the second discrimination processor can re-discriminate that the area is a non-road area.

(9) As represented by a roadway on which a vehicle can travel, there is a certain upper limit on the width dimension of the roadway. On the other hand, for example, land of a non-road area such as a farm field is often wider than a road.

Therefore, in the area recognition system according to (4), it is preferable that the identification information include information of a width dimension of a portion discriminated as a road by the first discrimination processor, and the discrimination condition include a condition that the width dimension exceeds a reference dimension.

According to this configuration, even if the first discrimination processor discriminates that the area is a road, the second discrimination processor can re-discriminate that the area is a non-road area.

(10) In the area recognition system according to any one of (1) to (9), it is preferable that the first discrimination processor discriminate whether the area is a road by using image information acquired by a camera as the first information.

According to the configuration, it is easy to discriminate whether the area is a road. For example, the first discrimination processor performs segmentation processing as image processing, and can perform discrimination using the result. The segmentation processing is performed using, for example, a trained model.

(11) In the area recognition system according to any one of (4) to (9), it is preferable that the information acquisition part acquire a three-dimensional point group data set of a target area obtained by a three-dimensional range sensor, and acquire, as the identification information, a height of a portion discriminated as a road by the first discrimination processor, using the three-dimensional point group data set.

According to the configuration, it is possible to accurately obtain the height of the portion discriminated as the road by the first discrimination processor.

(12) In the area recognition system according to any one of (1) to (11), it is preferable that the first discrimination processor discriminate whether the area is a road by using a three-dimensional point group data set acquired by a three-dimensional range sensor as the first information.

According to the configuration, it is possible to discriminate whether the area is a road without using image information obtained by a camera. With the three-dimensional point group data set, the information acquisition part can easily acquire information on the height of the portion discriminated as a road by the first discrimination processor.

(13) It is preferable that the area recognition system according to any one of (5) to (12) further include a position detector configured to detect a height of a reference position of the work vehicle.

With the configuration, the height of the reference position of the work vehicle can be obtained. The position detector detects the height position of the work vehicle based on, for example, position information of the work vehicle by a global navigation satellite system (GNSS)/global positioning satellite system, information by a barometer, or the like.

(14) In the area recognition system according to any one of (5) to (13), it is preferable that the confirmation processor use at least one of output information from an inertial measurement device mounted on the vehicle, information as a combination of position information for the vehicle obtained by a GNSS and map information, or work plan information for the vehicle in which work content and time are associated with each other.

According to the configuration, the confirmation processor can confirm that a position where the work vehicle is present is a road.

(15) A work vehicle according to the present embodiment includes: a vehicle body; a detection device configured to detect a surrounding area of the vehicle body as a detection target; and the area recognition system according to any one of (1) to (14).

According to the work vehicle, for example, even if the first discrimination processor discriminates that the area is a road, the second discrimination processor can re-discriminate that the area is a non-road area.

### <Details of Embodiment of Present Disclosure>

Hereinafter, the embodiment of the present disclosure will be described in detail with reference to the drawings. Note that at least some of the embodiments described below may be arbitrarily combined.

The technique of the present disclosure relates to an area recognition system in which a detection device such as a camera mounted on a work vehicle detects a surrounding area of the work vehicle, and recognizes whether a target area included in the detected area is a road, that is, whether the target area is a "road" or "land of a non-road area". The work vehicle may include the area recognition system, or a management device (management computer) other than the work vehicle that can communicate with the work vehicle may include the area recognition system.

In the following embodiment, a case where a work vehicle is a vehicle that performs work and the work vehicle has an area recognition system will be described.

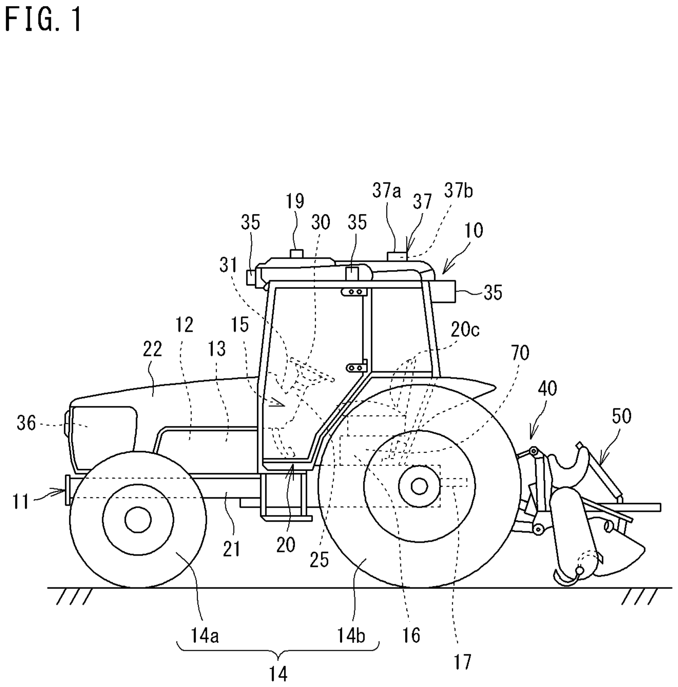

FIG. 1 is a side view illustrating an aspect of a work vehicle. A work vehicle 10 illustrated in FIG. 1 is a tractor, and is a vehicle that performs agricultural work. FIG. 1 illustrates a tractor to which an implement 50 is coupled.

In the present embodiment, regarding a target area to be recognized as a road or land of a non-road area, "road" will be used to refer a "roadway" on which vehicles can travel, and "farm field" will be used to refer "land other than road". When the work vehicle 10 is an agricultural rover that is smaller than the tractor, the work vehicle travels along a ridge (narrow road) not for vehicles. Therefore, the "road" is not limited to a "roadway". The "land of a non-road area" is not limited to a "farm field". Examples of the "land of a non-road area" include vacant lots and abandoned lots.

### [Work Vehicle 10]

The work vehicle 10 according to the present embodiment functions in both a manual driving mode, in which the work vehicle 10 is operated by a driver, and a self-driving mode, in which the work vehicle 10 performs unmanned driving. The work vehicle 10 can perform self-driving and manual driving both inside the farm field and on a roadway outside the farm field.

The manual driving is driving in which an operation (including traveling) of the work vehicle 10 is performed by a manual operation by a driver seated on a driver's seat 20 included in the work vehicle 10.

The self-driving is driving for operation (including traveling) of the work vehicle 10 performed by the function of the controller 70 of the work vehicle 10 without the manual operation by a driver.

The self-driving may be performed not only in an unmanned state where a driver is not seated on the driver's seat 20 but also in a manned state where a driver is seated on the driver's seat 20.

The self-driving is realized by a function of the controller 70. The controller 70 can control at least one of steering, adjustment of a moving speed, and start and stop of movement necessary for movement of the work vehicle 10.

In the case of self-driving, in addition to the traveling control of the work vehicle 10, the operation control of the implement 50 is also performed without being operated by a driver. That is, while the work vehicle 10 automatically travels, the work is automatically performed by the implement 50.

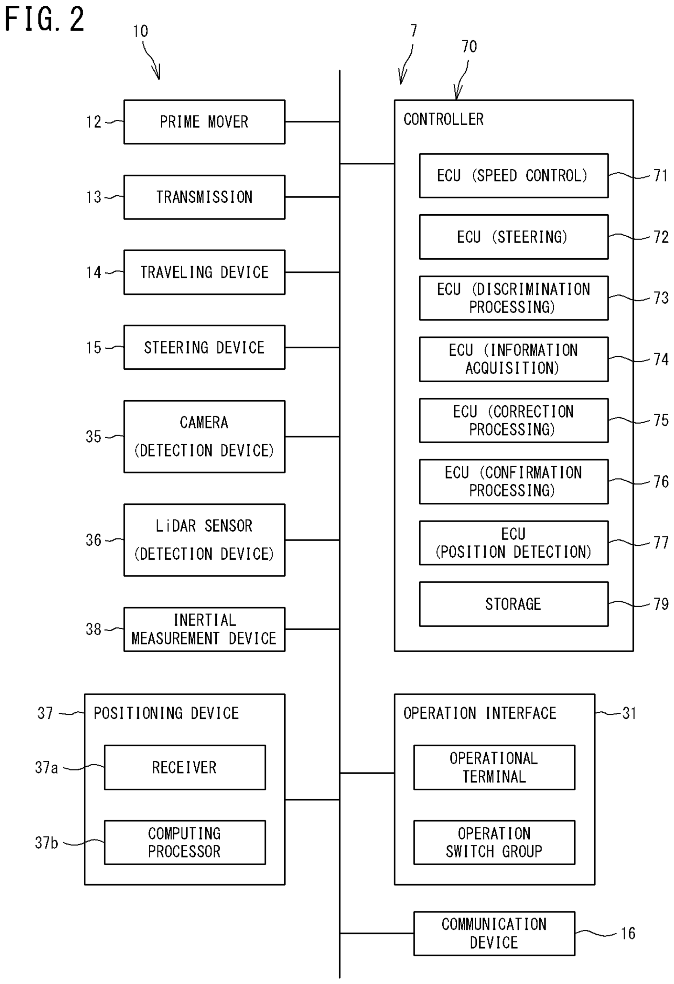

As will be described later, the work vehicle 10 includes a positioning device 37 including a GNSS receiver. The controller 70 causes the work vehicle 10 to automatically travel based on the position of the work vehicle 10 identified by the positioning device 37 and a target route previously stored in a storage 79 (see FIG. 2).

The self-driving also includes autonomous travelling, while sensing the surrounding environment by a detection device to be described later without involvement of a person in the control of the movement of the work vehicle 10.

The self-driving includes not only moving of the work vehicle 10 toward a destination along a predetermined route (target route) but also moving following a tracking target.

During such self-driving, as will be described later, a surrounding area is detected by a detection device such as cameras 35, and whether the target area is a roadway or a farm field is recognized.

The work vehicle 10 can also be driven by a remote operation by a person other than a driver seated on the driver's seat 20. For this purpose, the work vehicle 10 includes a communication device 16 (see FIG. 2). The work vehicle 10 is remotely operated by using wireless communication between the work vehicle 10 and a management computer in the management office (not illustrated). Note that, during the remote control, on the driver's seat 20, no person may be seated or a person may be seated. The remote operation may be prioritized over the manual operation.

In a case where the management computer includes an area recognition system, information communication for causing the area recognition system to function is performed through a communication device 16.

The direction of the work vehicle 10 is defined below. Front and rear, left and right, and upper and lower sides of the work vehicle 10 are defined with reference to a driver seated on a seat 20c of the driver's seat 20. That is, the front direction of the driver is "front", and the rear direction thereof is "rear". The right direction of the driver is "right", and the left direction thereof is "left". The front-rear direction and the left-right direction are parallel to the ground, and the front-rear direction and the left-right direction are orthogonal to each other. The vertical direction is orthogonal to both the front-rear direction and the left-right direction. The vertical direction may be referred to as a "height direction". The left-right direction may be referred to as a "vehicle width direction". The front direction is the "traveling direction" of the work vehicle 10.

The work vehicle 10 may not necessarily have the driver's seat 20. In this case, the work traveling direction of the work vehicle 10 is "front", and the direction opposite to the work traveling direction is "rear". The right direction of the work vehicle 10 when facing the work traveling direction is "right", and the left direction thereof is "left".

The work vehicle 10 includes a vehicle body 11, a prime mover 12, a transmission 13, a traveling device 14, a steering device 15, a linkage device 40, and the controller 70.

The vehicle body 11 includes a chassis 21 serving as a frame of the vehicle, a body 22 serving as an exterior, and the driver's seat 20. The driver's seat 20 is provided with a steering wheel 30 operated by a driver, and an operation unit (operation interface) 31 including an operation terminal and an operation switch group operated by a driver.

The prime mover 12 is an engine or a motor, and is a diesel engine in the present embodiment.

The traveling device 14 includes front wheels 14a and rear wheels 14b as wheels. The rotational force of the prime mover 12 is shifted by the transmission 13, and the rotational force is transmitted to the wheels, so that the work vehicle 10 travels. In a case where the work vehicle 10 travels in a farm field to perform work, the traveling device 14 may include crawlers as one or both of the front wheels and the rear wheels.

The steering device 15 includes a steering shaft 25 rotated by the steering wheel 30. The steering device 15 changes the rolling direction of the wheels (front wheels 14a) to change the traveling direction of the work vehicle 10. The steering device 15 includes an assist mechanism (power steering device). The assist mechanism assists the operation force of the steering wheel 30 by the driver by hydraulic pressure or electric power.

The transmission 13 includes a plurality of gears and the like. The transmission 13 changes the propulsion and the moving speed of the work vehicle 10. The transmission 13 can also switch between forward travel and rearward travel of the work vehicle 10.

The work vehicle 10 includes a power take-off mechanism (hereinafter, referred to as a "PTO mechanism"). In the present embodiment, the transmission 13 includes a PTO mechanism. The PTO mechanism includes a PTO shaft 17 as one of output shafts of the transmission 13. The motive power of the prime mover 12 rotates the PTO shaft 17. Various driving units included in the implement 50 are operated by the rotational force of the PTO shaft 17. The PTO shaft 17 serves as an output shaft for operating the implement 50.

The linkage device 40 links the implement 50 to the vehicle body 11. The linkage device 40 is mounted on a rear part of the vehicle body 11 (chassis 21). The linkage device 40 includes a lifting link mechanism that supports the implement 50 so as to be movable up and down. The lifting link mechanism is configured by, for example, a three-point link mechanism. The implement 50 is detachable from the work vehicle 10 by the linkage device 40. The lifting link mechanism changes a height position of the implement 50 or changes the posture of the implement 50 by an actuator such as a hydraulic device.

The implement 50 illustrated in FIG. 1 is a rotary tiller. The implement 50 is not limited to a rotary tiller, and may be, for example, a seeder, a spreader, a transplanter, a mower, a rake, a baler, a harvester, or the like. The linkage device 40 links the desired implement 50 to the work vehicle 10. The work vehicle 10 causes the implement 50 to perform predetermined work while pulling the implement 50. The linkage device 40 may be provided at the front part of the vehicle body 11.

The work vehicle 10 includes imagers. The imagers of the present embodiment are cameras 35. The cameras 35 are provided, for example, at the front, rear, left, and right of the work vehicle 10, and capture images of the surrounding environment of the work vehicle 10. The cameras 35 are, for example, CCD cameras including CCD image sensors or CMOS cameras including CMOS image sensors. The cameras 35 include a processing circuit that processes signals output from the image sensors, and the processing circuit acquires surrounding image information.

When the work vehicle 10 travels on a road or a farm field, the cameras 35 are used not only for recognizing white lines, signs, displays, or the like, but also for recognizing surrounding obstacles.

The cameras 35 may be either or both of visible cameras that generate visible light images and infrared cameras that generate infrared images. Infrared cameras make it easy to detect the surroundings at night.

Image information acquired by the cameras 35 is transmitted to the controller 70. The image information is used not only for self-driving control but also for manual driving. As will be described later, the controller 70 can discriminate between a roadway and a farm field, detect a roadway plane, and the like by using the image information together with other information (sensor data to be described later).

The work vehicle 10 includes a three-dimensional range sensor. The three-dimensional range sensor of the present embodiment is a light detection and ranging (LiDAR) sensor 36. The LiDAR sensor 36 is disposed, for example, at the lower part of the front surface of the vehicle body 11. The LiDAR sensor 36 may be disposed at another position. The LiDAR sensor 36 acquires and outputs sensor data indicating a distance and a direction between measurement points on objects existing in the surroundings and sensor data indicating a two-dimensional or three-dimensional coordinate values of the measurement points on objects existing in the surroundings. The sensor data acquired by the LiDAR sensor 36 is transmitted to the controller 70.

The sensor data from the LiDAR sensor 36 is used to detect a surrounding area. The controller 70 can discriminate between a roadway and a farm field, detect a roadway plane, and the like by using the sensor data together with other information (the image information).

In order to discriminate the type of the surrounding area of the work vehicle 10, the cameras 35 and the LiDAR sensor 36 function as sensors (detection devices) that detect the surrounding environment. Each of the image information which is the output of the cameras 35 and the three-dimensional point group data set which is the output of the LiDAR sensor 36 is information obtained with the surrounding area of the work vehicle 10 set as a detection target (detection information).

The sensor data from the LiDAR sensor 36 may be also used for other purposes. The controller 70 can perform an environment map generation processing utilizing an algorithm such as simultaneous localization and mapping (SLAM) based on the sensor data. The environment map generation processing may be performed by a computer that is, for example, an external management device capable of communicating with the work vehicle 10.

The work vehicle 10 includes a positioning device 37. The positioning device 37 receives satellite signals transmitted from a plurality of GNSS satellites, and performs positioning based on the satellite signals. The GNSS is a general term for satellite positioning systems including a global positioning system (GPS), a quasi-zenith satellite system (QZSS), such as "Michibiki", GLONASS (Russia), Galileo (Europe), and BeiDou (China).

The positioning device 37 includes a receiver 37a that receives satellite signals and a processor (computing processor) 37b. The receiver 37a includes an antenna that receives signals from a GNSS satellite. The processor 37b calculates the position (coordinates) of the work vehicle 10 based on signals received by the antenna. The receiver 37a is disposed above the driver's seat 20, for example. Information indicating the position of the work vehicle 10 is transmitted to the controller 70 and used for self-driving or the like.

The positioning device 37 corrects or complements the position information of the work vehicle 10 based on the satellite signals utilizing the data acquired by the cameras 35 and the LiDAR sensor 36. The position of the work vehicle 10 is identified with a higher accuracy.

The work vehicle 10 includes an inertial measurement device 38. The inertial measurement device 38 includes a triaxial gyro sensor and a three-directional acceleration sensor. The inertial measurement device 38 detects an inclination and an operation of the work vehicle 10. Signals acquired by the inertial measurement device 38 are transmitted to the controller 70. Detection signals from the inertial measurement device 38 are used to complement the position information of the work vehicle 10. Accordingly, the positioning accuracy is improved.

### [System Configuration of Work Vehicle 10]

FIG. 2 is a block diagram illustrating a system configuration of the work vehicle 10.

The controller 70 includes a control unit (computer) including a processor (computing processing device) and a memory including a RAM, a ROM, and the like. The processor reads a computer program from the memory and executes the computer program to perform the functions of the controller 70. The controller 70 may be configured by one control unit (electronic control unit: ECU) or may be configured by a plurality of control units. In a case where the controller 70 includes a plurality of control units, information communication can be performed between the control units.

In the present embodiment, the controller 70 includes a control unit 71 for speed control, a control unit 72 for steering, a control unit 73 for first discrimination processing, a control unit 74 for information acquisition, a control unit 75 for second discrimination processing, a control unit 76 for confirmation processing, and a control unit 77 for position detection.

The controller 70 includes the storage (storage unit) 79 including a nonvolatile memory or the like that stores various types of information. Various computer programs for causing the control unit to function are stored in the storage 79. The storage 79 stores map information that can be used for self-driving, a trained model to be described later, a database, and the like.

The control unit 71 for speed control provides generated drive signals to the prime mover 12, the transmission 13, and the brake device to perform control such as adjustment of the traveling speed and stop of the work vehicle 10.

The control unit 72 for steering provides generated steering signals to the steering device 15. The control unit 72 controls a hydraulic device or an electric motor included in the assist mechanism of the steering device 15 based on measurement values by a rotation sensor of the steering shaft 25 to control steering of the work vehicle 10.

In the following description, the control unit 73 for the first discrimination processing is referred to as a first discrimination processing unit 73. The control unit 74 for information acquisition is referred to as an information acquisition unit 74. The control unit 75 for the second discrimination processing is referred to as a second discrimination processing unit 75. The control unit 76 for confirmation processing is referred to as a confirmation processing unit 76. The control unit 77 for position detection is referred to as a position detection unit 77.

### [Area Recognition System 7]

In the present embodiment, as described above, the work vehicle 10 includes an area recognition system 7. A detection device such as the cameras 35 mounted on the vehicle body 11 detects the surrounding area. The area recognition system 7 discriminates whether the position of the work vehicle 10 itself and its surrounding area are a roadway or a non-roadway area using the detection information from the detection device.

Each function of the area recognition system 7 will be described assuming that the work vehicle 10 is present on a roadway such as a roadway or a farm road.

The area recognition system 7 includes a first discrimination processing unit 73, an information acquisition unit 74, a second discrimination processing unit 75, a confirmation processing unit 76, and a position detection unit 77. The function of each unit will be described below.

### [First Discrimination Processing Unit 73]

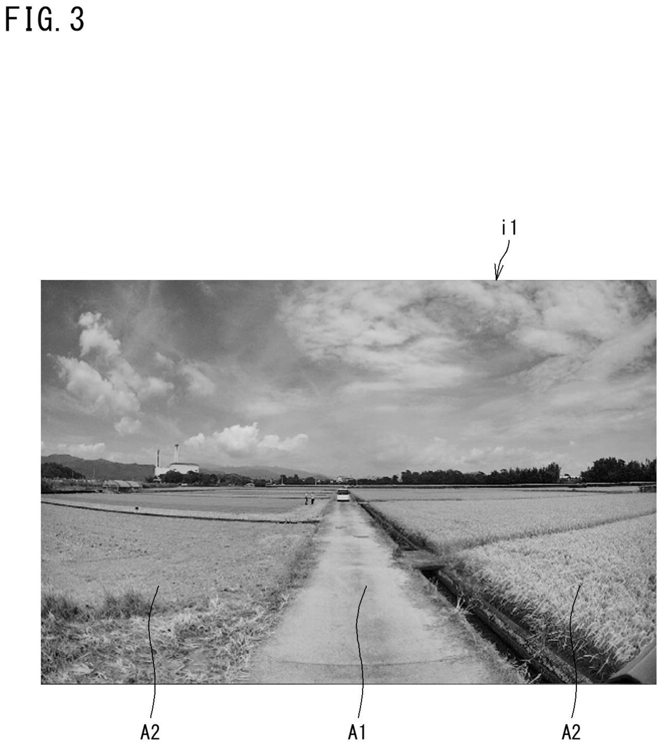

FIG. 3 is an image diagram illustrating an example of image information i1 obtained by the cameras 35. The first discrimination processing unit 73 uses the image information i1 as the first information to discriminate whether an area included in the image information i1 is a roadway. Therefore, the first discrimination processing unit 73 first performs image processing. As the image processing, segmentation processing is performed on the image information i1.

The segmentation processing is performed in particular by a semantic segmentation algorithm. The algorithm is a deep planning algorithm that associates labels (or categories) with all pixels in an image. As a result, a group of pixels forming a characteristic label (or category) is recognized.

In the present embodiment, a trained model for discriminating a roadway is used. Therefore, machine learning using the image information of the area and the type (label) of the area as a data set is performed in advance. A trained model to which the image information is input and that outputs the type of the area as output data is generated. The trained model is stored in the storage 79.

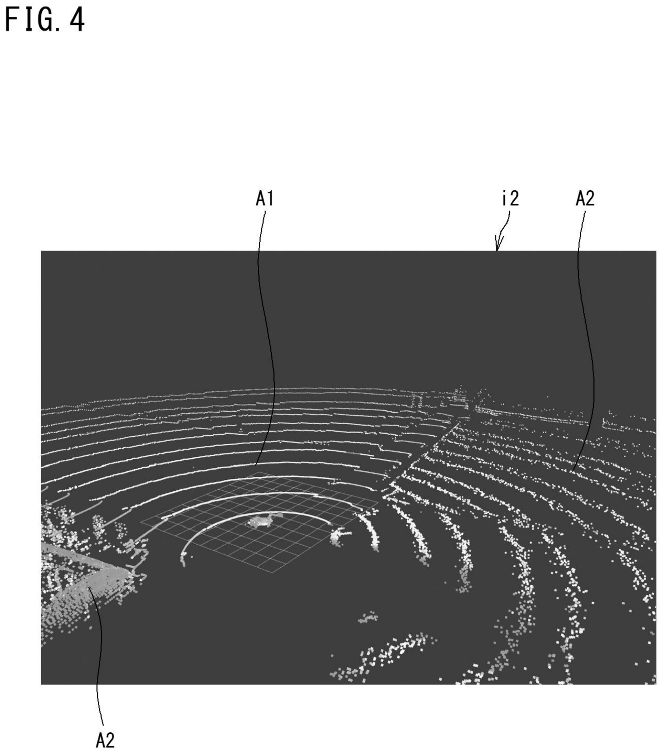

FIG. 4 is an image diagram illustrating an example of a three-dimensional point group data set i2 obtained by the LiDAR sensor 36. The first discrimination processing unit 73 may use the three-dimensional point group data set i2 as the first information to discriminate whether an area included in the three-dimensional point group data set i2 is a roadway. Also in this case, the segmentation processing using the three-dimensional point group data set i2 is performed. It is discriminated whether the area is a roadway using a trained model obtained by machine learning in advance.

Whether the area is a roadway may be discriminated using both the image information i1 and the three-dimensional point group data set i2. In this case, the one with higher reliability may be adopted.

As described above, the first discrimination processing unit 73 has a function as a first discrimination processor that discriminates whether a detection position in the detection target is a roadway based on the first information obtained with the surrounding area of the work vehicle 10 set as the detection target.

### [Information Acquisition Unit 74]

The information acquisition unit 74 acquires the identification information i3 on the height or the width of the portion discriminated as a roadway by the first discrimination processing unit 73. In the present embodiment, the information acquisition unit 74 uses the three-dimensional point group data set i2 as second information in order to acquire the identification information i3. That is, the information acquisition unit 74 uses the three-dimensional point group data set i2 to acquire the identification information i3 on the height or the width of the portion discriminated as a roadway by the first discrimination processing unit 73.

The "portion discriminated as a roadway by the first discrimination processing unit 73" is, for example, portions of areas A2 in the image information i1 illustrated in FIG. 3. Note that, in this description, it is assumed that the first discrimination processing unit 73 (erroneously) discriminates that a portion of the areas A2 is a roadway different from the actual portion.

The information acquisition unit 74 uses the three-dimensional point group data set i2 included in the portion of the areas A2 to acquire the identification information i3 on the height or the width of the portion. Hereinafter, the "portion discriminated as a roadway by the first discrimination processing unit 73" is referred to as a "discriminated portion".

The "information on the height of the discriminated portion" includes the information stated in (A) and (B) below.
(A) The height of the discriminated portion. That is, the coordinate values in the height direction of the discriminated portion. As the height, for example, an average value of the heights in the discriminated portion is adopted.
(B) A value indicating variation in height component of the three-dimensional point group data set included in the discriminated portion.

For example, a standard deviation is adopted as the value indicating variation.

In order to acquire the identification information i3, the information acquisition unit 74 may assign the three-dimensional point group data set i2 that is three-dimensional information to the image information i1 that is two-dimensional information, and detect the plane of the area. For this purpose, an algorithm of plane estimation by randam sample consensus (RANSAC) is used. An example of the plane estimation is "https://tech-deliberate-jiro.com/python-ransac/". By this means, the discriminated portion is detected as a plane, and the plane is set as a "detection surface".

In the following embodiment, a case where the discriminated portion is a "detection surface" obtained by the plane estimation will be described.

In the case of (A), the value of the height of the detection surface is a value based on the three-dimensional coordinate system for the LiDAR sensor 36. The LiDAR sensor 36 is mounted on the work vehicle 10. The LiDAR sensor 36 includes a reception unit including a plurality of optical sensors. For example, the mounting position of the reception unit (center position) on the vehicle body 11 is the origin of the three-dimensional coordinate system for the LiDAR sensor 36.

In the case of (B), the value indicating variation in the height component is calculated from the height components out of the coordinate values of the three-dimensional point group data set i2.

As illustrated in FIG. 4, regarding the three-dimensional point group data set i2 acquired on the roadway in the central area A1, the variation in the component in the height direction is small. This is because the height of the road surface of the roadway is substantially uniform. On the other hand, as illustrated in FIG. 4, regarding the three-dimensional point group data set i2 acquired in the areas A2 on both sides (particularly, the area A2 on the right side of FIG. 4), the variation in the component in the height direction is large. This is because the ground of the farm field has many irregularities, and many crops (plants) grow on one surface in the farm field, and a virtual plane including the upper ends of these crops is detected as a detection surface. That is, this is because the upper ends of the crops grown all over the farm field (virtual plane) are not exactly on the same plane.

The means for acquiring the information on the height of the discriminated portion may be any means other than that based on plane estimation by RANSAC. For example, some points are sampled from the three-dimensional point group data set i2 belonging to the discriminated portion. A value (coordinate value) of each sampled point in the height direction is acquired. These statistical values (for example, average value and variation) may be adopted as the height information of the discriminated portion.

The information acquisition unit 74 can also acquire a width dimension (dimension in the left-right direction) on the detection surface as the identification information i3. For example, as the identification information i3 on the width dimension on the detection surface, a width dimension of the portion that is 10 meters away from the work vehicle 10 is obtained from the three-dimensional point group data set i2. In the case of the example illustrated in FIG. 4, the areas A2 on both sides are wide farm fields, and the detection range of the areas A2 by the LiDAR sensor 36 is wide. Therefore, the width dimension of each of the areas A2 on both sides is a large value of several tens of meters or more.

The second information used to acquire the identification information i3 is the three-dimensional point group data set i2, and is different from the first information (image information i1) used by the first discrimination processing unit 73.

As the identification information i3, the width dimension on the detection surface may be acquired based on the image information i1 obtained by the cameras 35. For example, the width dimension at a portion that is 10 meters away from the center of the work vehicle 10 may be obtained based on the image information i1. That is, the second information used to acquire the identification information i3 is the image information i1, and may be the same as the first information (image information i1) used by the first discrimination processing unit 73.

As described above, the information acquisition unit 74 has a function as an information acquisition processor that acquires identification information i3 on the height of the detection surface and identification information i3 on the width of the detection surface.

### [Confirmation Processing Unit 76]

The confirmation processing unit 76 uses information different from the detection information from the cameras 35 and the LiDAR sensor 36 to confirm that the presence position of the work vehicle 10 is on the roadway. The confirmation processing unit 76 can use at least one of the information described in the following (1) to (3) as the different information, but may use information other than the information described in (1) to (3).
(1) Output information from the inertial measurement device 38 mounted on the work vehicle 10
(2) Combination information of position information of the work vehicle 10 obtained by the positioning device 37 (GNSS) and map information
(3) Information of a work plan for the work vehicle 10 in which work content and time are associated with each other

A specific example in the case of using the information of (1) will be described. When the work vehicle 10 performs self-driving, the garage (barn) is the travel start position of the work vehicle 10. The garage exists in contact with a road such as a farm road or a roadway. Therefore, the confirmation processing unit 76 acquires the information output from the inertial measurement device 38 from moment to moment from the travel start position.

Here, in general, farm fields are located at a position lower than the roadway, and an approach route from the roadway to the farm field has a relatively steep gradient. Therefore, when information indicating a steep gradient (particularly, a downward gradient) is acquired by the inertial measurement device 38, it is estimated that the work vehicle 10 has traveled an approach route from the roadway to the farm field. In this case, it is confirmed that the area where the work vehicle 10 is present is a farm field. On the other hand, when the information indicating a steep gradient is not acquired, it is confirmed that the work vehicle 10 still travels on the roadway and the area where the work vehicle 10 is present is the roadway.

A specific example in the case of using the information of (2) will be described. The map information includes information on the latitude and longitude of places, and includes information indicating the areas of farm fields and information indicating the areas of roadways. Therefore, the confirmation processing unit 76 collates the position information (latitude and longitude information) of the work vehicle 10 obtained by the positioning device 37 with the map information. The collation confirms that the area where the work vehicle 10 is present is a roadway.

A specific example in the case of using the information of (3) will be described. The "work plan" is a plan related to work performed by the work vehicle 10 in and outside the farm field. The plan related to the work in the farm field includes the type of agricultural work (for example, bed soil making, ridging, tilling, rice planting, and the like), the start and end times of the agricultural work, and the like. The work plan includes a plan related to work outside the farm field, and includes, for example, a plan for traveling on a road (roadway) leading to the farm field. In this case, the information on the work plan includes information on the road on which the work vehicle travels and the time at which the work vehicle travels on the road.

Therefore, the confirmation processing unit 76 refers to the information on the work plan. The work plan information is stored in the storage 79. For example, as the work plan, it is set that 9:00 AM to 9:30 AM is a time zone in which the vehicle travels on a first roadway from the garage to move to a first farm field. When the confirmation time by the confirmation processing unit 76 is 9:10 AM, the confirmation processing unit 76 confirms that the area where the work vehicle 10 is present is a roadway.

The confirmation processing unit 76 may use the same information as the detection information from the cameras 35 or the LiDAR sensor 36 to confirm that the presence position of the work vehicle 10 is on the roadway. In this case, the confirmation processing unit 76 uses an algorithm different from the discrimination by the first discrimination processing unit 73. For example, recognition of a lane or a sign by image processing on an image captured by the cameras 35 enables confirmation that the position where the work vehicle 10 is present is a roadway.

As described above, the confirmation processing unit 76 has a function of a confirmation processor that confirms that the position where the work vehicle 10 is present is a roadway.

### [Position Detection Unit 77]

The position detection unit 77 detects the height of the reference position of the work vehicle 10. Any position in the work vehicle 10 can be set as the reference position. In the present embodiment, the reference position is a position indicating the vehicle height of the work vehicle 10, that is, a position of the highest point of the work vehicle 10 (the upper end of the roof of the driver's seat 20). The position detection unit 77 can detect a height position (coordinates) of the reference position of the work vehicle 10 based on, for example, position information of the work vehicle 10 obtained by the positioning device 37 (GNSS).

The position (coordinates) obtained by the positioning device 37 is a mounting position of the receiver 37a for satellite signals. The position where the receiver 37a is mounted, the position of the highest point of the work vehicle 10, and the value of the difference between these positions are known. Therefore, when the position of the receiver 37a does not match with the position of the highest point of the work vehicle 10, the position detection unit 77 obtains the height of the reference position of the work vehicle 10 using the position information obtained by the positioning device 37 and the known values.

Alternatively, as another means, the work vehicle 10 includes a barometer. In this case, the position detection unit 77 may detect the height position of the work vehicle 10 based on the information measured by the barometer.

The "reference position" can be set (can be changed) to another position, and may be, for example, a position where the work vehicle 10 is in contact with the ground (road surface) or the mounting position of the receiver 37a of the positioning device 37 serving as a detector.

In the present embodiment, information obtained by the positioning device 37 or the like is used as information other than the detection information from the cameras 35 and the LiDAR sensor 36 in order to detect the height of the reference position. The present invention is not limited to the configuration, and detection information from the cameras 35 and the LiDAR sensor 36 may be used for detecting the height of the reference position.

As described above, the position detection unit 77 has a function as a position detector that detects the height of the reference position of the work vehicle 10.

### [Second Discrimination Processing Unit 75]

As described above, the first discrimination processing unit 73 discriminates (primarily discriminates) whether the position is a roadway based on the first information obtained by setting a surrounding area of the work vehicle 10 as the detection target. In the following description, as described above, it is assumed that the area A2 on the right side of FIG. 3 and FIG. 4 is discriminated as a roadway different from the actual portion as the primary discrimination.

The information acquisition unit 74 acquires identification information i3 on the height of the detection surface in the area A2 and identification information i3 on the width of the detection surface in the area A2.

Although the areas A2 has been discriminated as a roadway, the second discrimination processing unit 75 discriminates that the portion discriminated as a roadway by the first discrimination processing unit 73 is a non-roadway area (secondary discrimination) in a case where the identification information i3 satisfies a predetermined discrimination condition.

The discrimination condition is a condition related to the height or a condition related to the width, and a specific example will be described later. The discrimination condition is preset, and information (hereinafter, it is referred to as "discrimination condition information") indicating the discrimination condition is stored in the storage 79. The second discrimination processing unit 75 collates (compares) the identification information i3 with the discrimination condition information, and discriminates a portion discriminated as a roadway by the first discrimination processing unit 73 is a non-roadway area according to the collation result.

The discrimination condition (discrimination condition information) includes at least one of a first discrimination condition to a fourth discrimination condition to be described later. In the present embodiment, the discrimination condition includes all of the first discrimination condition to the fourth discrimination condition to be described later, and is selectively used. The second discrimination processing unit 75 performs processing of collating the identification information i3 with each piece of discrimination condition information.

In the following description, the area A2, which is a farm field on the right side illustrated in FIG. 3 and FIG. 4, will be described.

In the case of the first discrimination condition and the second discrimination condition, the height of the detection surface of the area A2 that is a farm field is compared with the reference position of the work vehicle 10. The height of the detection surface of the area A2, which is a farm field, is obtained using the three-dimensional point group data set i2 obtained by the LiDAR sensor 36. The reference position of the work vehicle 10 is obtained using positioning information obtained by the positioning device 37. The height of the detection surface in the area A2 that is a farm field and the reference position of the work vehicle 10 are based on different coordinate systems. In order to compare the height of the detection surface of the area A2 that is a farm field with the reference position of the work vehicle 10, conversion processing of the coordinate system described below is performed.

A basic coordinate system with any position of the work vehicle 10 set as a reference (origin) is defined. The mounting position of the positioning device 37 (receiver 37a) in the work vehicle 10 is known. The coordinates indicated by the position information acquired by the positioning device 37 are fitted in (converted to) the basic coordinate system. The mounting position of the LiDAR sensor 36 (reception unit including a plurality of optical sensors) in the work vehicle 10 is known. The coordinates of the three-dimensional point group data set acquired by the LiDAR sensor 36 are fitted in (converted to) the basic coordinate system. As described above, the second discrimination processing unit 75 can compare the heights using the basic coordinate system. Any one of the information acquisition unit 74, the position detection unit 77, and the second discrimination processing unit 75 may perform the conversion processing, or another control unit may perform the conversion processing.

As described above, the second discrimination processing unit 75 functions as a second discrimination processor that discriminates between a roadway and a non-roadway area using the identification information i3 on the height or the width. The identification information i3 is information based on the second information such as the three-dimensional point group data set i2 obtained for the range overlapping the range discriminated by the first discrimination processing unit 73 using the first information such as the image information i1.

The "range discriminated by the first discrimination processing unit 73 as a roadway using the first information such as the image information i1" is, for example, a range of the areas A2 in the image information i1 illustrated in FIG. 3. The "second information (three-dimensional point group data set i2) obtained for the range overlapping the range" is information in the whole or a part of the range of the area A2. Based on the second information, the identification information i3 on the height or the width of the discriminated portion (detection plane) discriminated as the roadway by the first discrimination processing unit 73 is obtained. Then, a roadway and a non-roadway area are discriminated using the identification information i3.

Hereinafter, the first discrimination condition to the fourth discrimination condition will be described, and that the first discrimination processing unit 73 (erroneously) discriminates the areas A2 that are farm fields as roadways (primary discrimination), and the second discrimination processing unit 75 discriminates whether the areas A2 are roadways or non-roadway areas (secondary discrimination) will be described.

### [Specific Example of Discrimination Condition and Second Discrimination Processing]

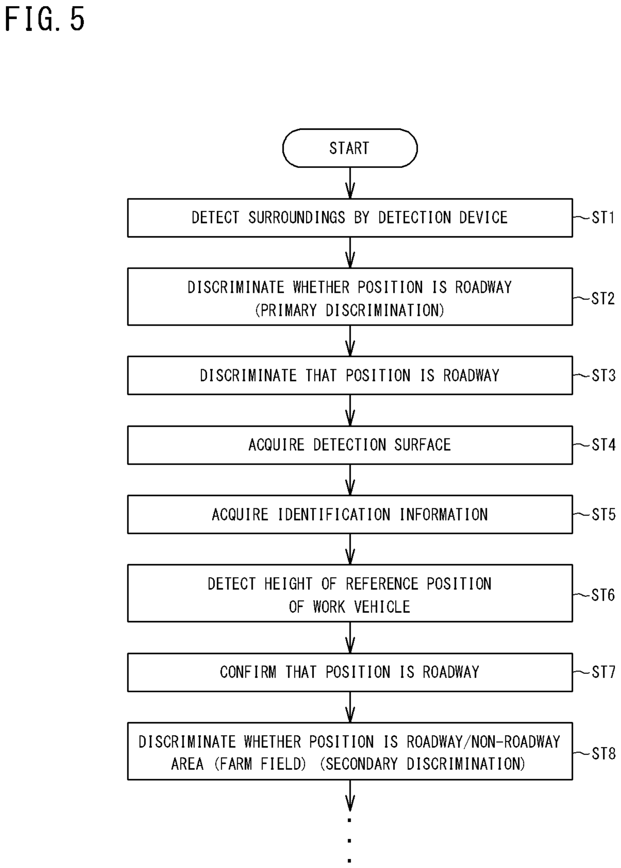

FIG. 5 is a flowchart illustrating an example of processing performed by the area recognition system 7.

The work vehicle 10 present on a roadway detects the surrounding environment by the cameras 35 and the LiDAR sensor 36 (step ST1 in FIG. 5).

Upon acquisition of the detection information (FIG. 3) obtained by the cameras 35, the first discrimination processing unit 73 discriminates whether each position (area of a pixel group) of the image information i1 obtained by the cameras 35 is a roadway using a trained model to which the detection information from the cameras 35 is input (step ST2 in FIG. 5). In the present embodiment, the position corresponding to the area A2 that is the farm field is erroneously discriminated as a roadway (step ST3 in FIG. 5).

The information acquisition unit 74 obtains the detection surface by, for example, a plane estimation algorithm by RANSAC (step ST4 in FIG. 5). The three-dimensional point group data set i2 is used to obtain the detection surface for the portion discriminated as a roadway by the first discrimination processing unit 73. The information acquisition unit 74 acquires the identification information i3 on the height and the width of the detection surface using the three-dimensional point group data set i2. That is, the identification information i3 on the height of the detection surface and the identification information i3 on the width of the detection surface for the area A2 that is actually a farm field but discriminated as a roadway are acquired (step ST5 in FIG. 5). The identification information i3 on the height of the detection surface includes (A) and (B) described above.

The position detection unit 77 detects the height of the reference position of the work vehicle 10 using the position information acquired by the positioning device 37 (step ST6 in FIG. 5).

The confirmation processing unit 76 performs processing of confirming that the position where the work vehicle 10 is present is a roadway (step ST7 in FIG. 5).

Note that steps ST5, ST6, and ST7 can be performed in any order, and one step of these steps may be performed simultaneously with another step.

In step ST3, the area A2 that is actually a farm field is discriminated as a roadway. Even if a farm field is discriminated as a roadway in this way, when the identification information i3 satisfies any one of the first discrimination condition to the fourth discrimination condition, the second discrimination processing unit 75 discriminates a portion (area A2) discriminated as a roadway by the first discrimination processing unit 73 as a non-roadway area. That is, a portion (area A2) discriminated as a roadway by the first discrimination processing unit 73 is discriminated as a non-roadway area (farm field) (step ST8 in FIG. 5).

### [(1) Case where First Discrimination Condition is Used]

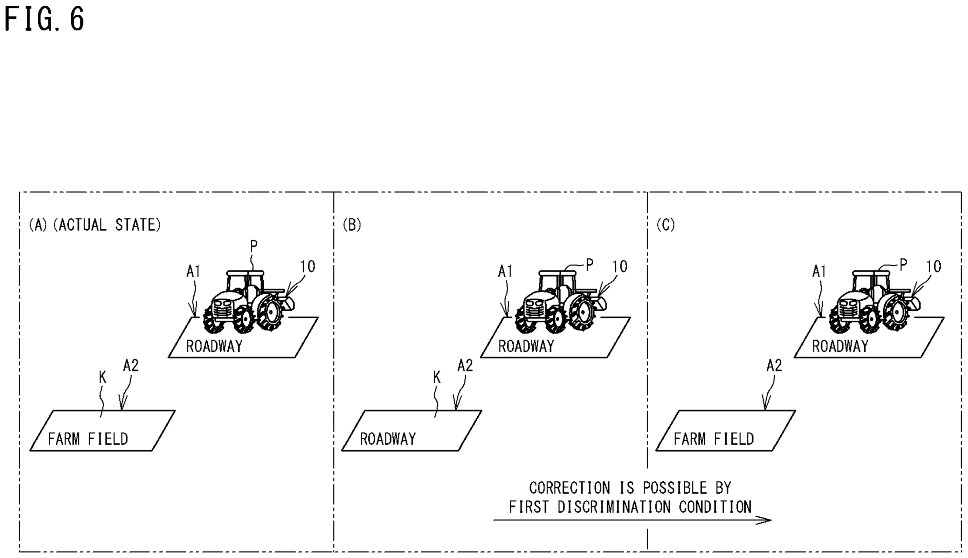

As illustrated in FIG. 6 (A), the area A2 which is adjacent to the area A1 where the work vehicle 10 is present and has been discriminated as a roadway is a farm field.

However, as illustrated in FIG. 6 (B), it is erroneously discriminated as a roadway by the primary discrimination. Therefore, the second discrimination processing unit 75 collates the identification information i3 indicating the height of a detection surface K of the area A2 with first discrimination condition (1) below.

First discrimination condition: The condition that the height of the detection surface K in the area A2 is lower than a reference position P of the work vehicle 10 by more than a first threshold.

The first threshold is any value that is preset. When the reference position P is the highest point of the work vehicle 10, the first threshold is a value in consideration of the vehicle height of the work vehicle 10, and is changed depending on the type of the work vehicle 10. When the position where the work vehicle 10 is in contact with the ground (road surface) is the reference position P, the first threshold is, for example, 0.3 meters. Alternatively, the first threshold is a value of 1/3 of the diameter of the tire of the work vehicle 10.

The first discrimination condition is based on the fact that the ground surface of the farm field is generally lower than the ground surface of the roadway (road surface) by one step in many cases.

The first discrimination condition is used, for example, in two cases where the detection surface K is as follows.
<1> The ground surface of a farm field where plants are not grown.
<2> A virtual plane that includes the upper ends of many relatively short crops (plants) growing on the ground.

In a case where the identification information i3 satisfies the first discrimination condition, as illustrated in FIG. 6 (C), the area A2 is discriminated not as a roadway but as a non-roadway area (farm field).

### [(2) Case where Second Discrimination Condition is Used]

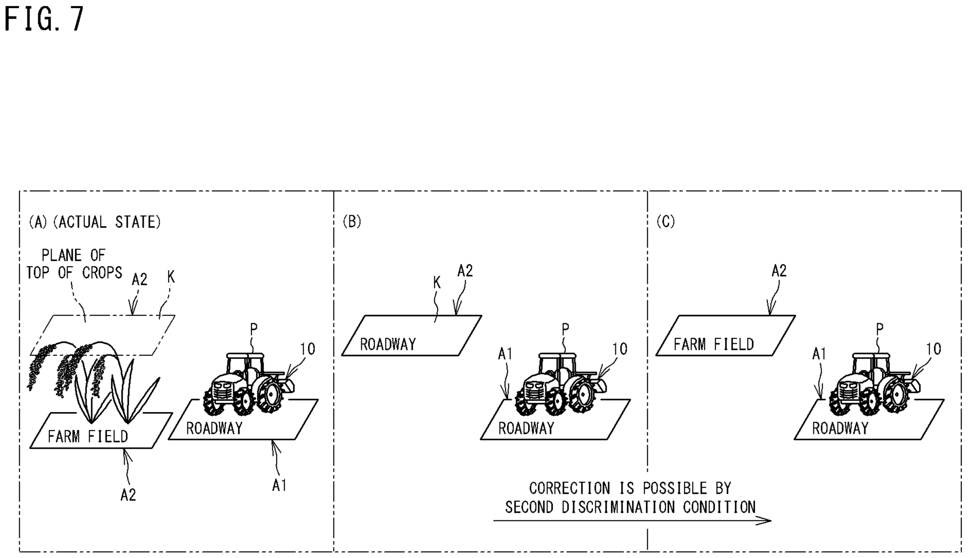

As illustrated in FIG. 7 (A), the area A2 adjacent to the area A1 where the work vehicle 10 is present is a farm field, and the ground of the field is lower than the area A1, which is a roadway. However, many relatively tall crops are grown all over the farm field. The virtual plane including the upper ends of the crops serves as the detection surface K of the area A2, and the first discrimination processing unit 73 may erroneously discriminate that the area A2 is a roadway (see FIG. 7 (B)). Therefore, the second discrimination processing unit 75 collates the identification information i3 indicating the height of a detection surface K of the area A2 with second discrimination condition below.

Second discrimination condition: The condition that the height of the detection surface K in the area A2 is higher than the reference position P of the work vehicle 10 by more than a second threshold.

The second threshold is any value that is preset. When the reference position P is the highest point of the work vehicle 10, the second threshold is a value in consideration of the vehicle height of the work vehicle 10, and is changed depending on the type of the work vehicle 10. When the position where the work vehicle 10 is in contact with the ground (road surface) is the reference position P, the second threshold is, for example, 0.5 meters. Alternatively, the second threshold is a value of 1/3 of the diameter of the tire of the work vehicle 10.

In a case where the identification information i3 satisfies the second discrimination condition, as illustrated in FIG. 7 (C), the area A2 is discriminated not as a roadway but as a non-roadway area (farm field).

### [(3) Case where Third Discrimination Condition is Used]

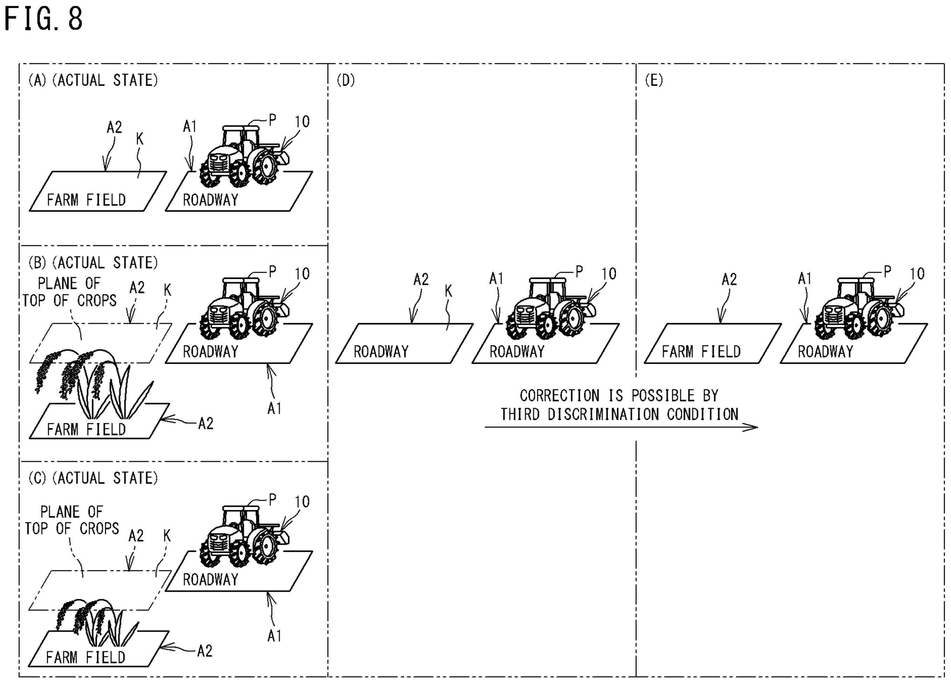

As illustrated in FIG. 8 (A), when the roadway (area A1) and the farm field (area A2) have substantially the same height, the first discrimination condition and the second discrimination condition are not satisfied.

As illustrated in FIG. 8 (B) and FIG. 8 (C), when a virtual plane including the upper ends of the crops grown all over the farm field (area A2) serves as the detection surface K of the area A2, and the detection surface K and the roadway (area A1) have substantially the same height, the first discrimination condition and the second discrimination condition are not satisfied similarly to the case in FIG. 8 (A).

Therefore, the erroneous discrimination of the second area A2 as a roadway by the primary discrimination is not corrected.

Even in such a case, there are cases where the erroneous primary discrimination can be corrected by using a third discrimination condition. The second discrimination processing unit 75 collates the identification information i3 indicating the width dimension of the area A2 with the third discrimination condition below.

The third discrimination condition is based on the following knowledge. As represented by a roadway on which a vehicle can travel, there is a certain upper limit on the width dimension of the roadway and the width dimension is set accordingly. On the other hand, land of a non-road area such as a farm field is often wider than a road (roadway).

Third discrimination condition: The condition that the width dimension of the area A2 exceeds the reference dimension.

The reference dimension is, for example, 15 meters. When the width dimension of the area exceeds 15 meters, it is considered that the area is not a roadway but a farm field. Alternatively, the reference dimension may be the total dimension of the widths of four work vehicles 10.

As illustrated in FIG. 8 (D), even in a case where primary discrimination is erroneously made that the area A2 is a roadway, when the identification information i3 satisfies the third discrimination condition, the area A2 is discriminated not to be a roadway but to be a non-roadway area (farm field) as illustrated in FIG. 8 (E).

### [(4) Case where Fourth Discrimination Condition is Used]

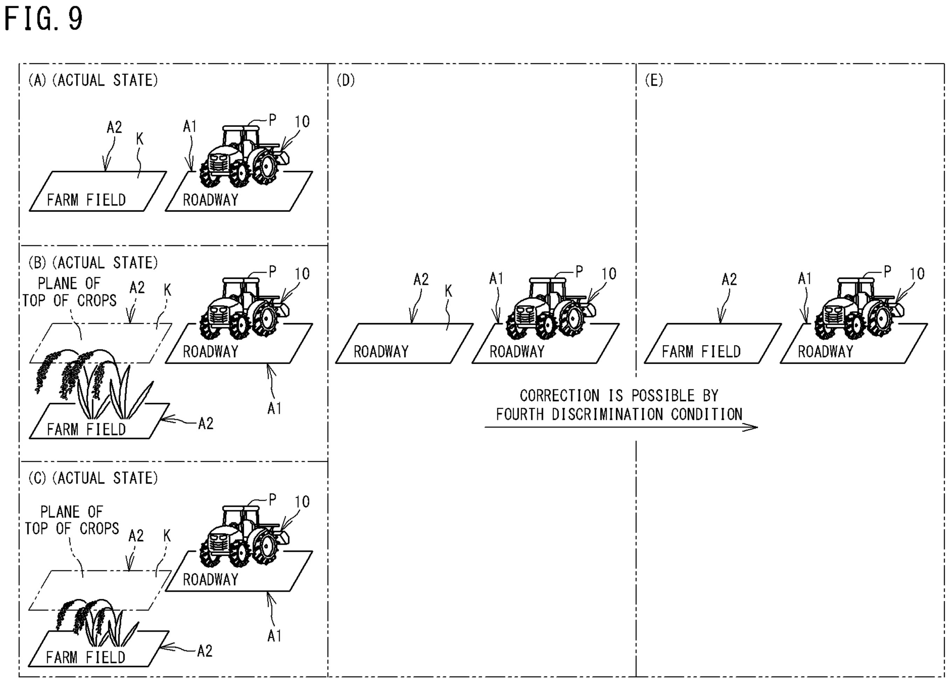

The second discrimination processing unit 75 can perform processing of secondary discrimination using a fourth discrimination condition instead of or in combination with the third discrimination condition. As illustrated in FIG. 9 (B) and FIG. 9 (C), there is a case where a virtual plane including the upper ends of the crops grown all over the farm field (area A2) serves as the detection surface K of the second area A2, and the detection surface K and the roadway (area A1) have substantially the same height. Then, there is a case where the area A2 is erroneously discriminated as a roadway by the primary discrimination (see FIG. 9 (D)).

However, the upper ends of these crops (virtual plane K) are not exactly on the same plane. Therefore, as illustrated in FIG. 4, when the area A2 is detected by the LiDAR sensor 36, the height components of the three-dimensional point group data set in the detection surface of the area A2 vary.

Therefore, in this case, the second discrimination processing unit 75 uses a value indicating variation in the height component of the (B) three-dimensional point group data set as the identification information i3 on the height of the detection surface of the area A2. The identification information i3 is collated with the fourth discrimination condition described below.

Fourth discrimination condition: The condition that the value indicating variation in the height component of the three-dimensional point group data set in the area A2 exceeds the range of a third threshold.

The range of the third threshold is arbitrarily set. That is, when the variation in the height component of the three-dimensional point group data set in the second area A2 is large, the fourth discrimination condition is satisfied.

In a case where the identification information i3 satisfies the fourth discrimination condition, as illustrated in FIG. 9 (E), the area A2 is discriminated not as a roadway but as a non-roadway area (farm field).

As illustrated in FIG. 7 (A), actually, the roadway (area A1) and the farm field (area A2) have substantially the same height, but there is a case where a virtual plane including the upper ends of the crops grown all over the farm field (area A2) serves as the detection surface K of the area A2, and the area A2 is erroneously discriminated as a roadway by the primary discrimination. Even in such a case, the secondary discrimination processing utilizing the fourth discrimination condition can correct the primary discrimination.

### [Each Discrimination Condition]

As described above, even if the first discrimination processing unit 73 erroneously discriminates the area A2 as a roadway by the primary discrimination, in a case where the identification information i3 satisfies the discrimination condition, the second discrimination processing unit 75 can correct the primary discrimination on the assumption that the area A2 is a non-roadway area (farm field).

### [Area Recognition System of the Present Embodiment]

The area recognition system according to the present embodiment includes a controller (computer) 70 including one or a plurality of control units that discriminate whether the surrounding area is a road (roadway) by using detection information obtained with the surrounding area of the work vehicle 10 set as a detection target.

The controller 70 includes the first discrimination processing unit 73 and the second discrimination processing unit 75. The first discrimination processing unit 73 discriminates whether the position is a roadway based on the first information (image information i1 obtained by the cameras 35) obtained by setting the surrounding area of the work vehicle 10 as the detection target. The second discrimination processing unit 75 discriminates between a roadway and a non-roadway area using the identification information i3 on the height or the width. The identification information i3 is information based on the second information (three-dimensional point group data set i2) obtained for the range overlapping the range discriminated as a roadway using the first information.

The "range discriminated as a roadway using the first information" is, for example, a range of the areas A2 in the image information i1 illustrated in FIG. 3. The "second information (three-dimensional point group data set i2) obtained for the range overlapping the range" is information in the whole or a part of the range of the area A2. Based on the second information, the identification information i3 on the height or the width of the portion (detection plane) discriminated as a roadway by the first discrimination processing unit 73 is obtained. Then, a roadway and a non-roadway area are discriminated using the identification information i3.

According to the area recognition system of the present embodiment, in a case where the identification information i3 on a portion primarily discriminated as a roadway satisfies a discrimination condition, the portion can be discriminated as a non-roadway area. Therefore, it is possible to suppress erroneous recognition of the farm field as a roadway.

As a result, it is possible to prevent the self-driving of the work vehicle 10 from being interrupted due to erroneous recognition of a roadway.

### [Others]

The technique of the present disclosure is applicable not only to a tractor that is a vehicle (work vehicle 10) but also to vehicles of other types. For example, the vehicle may be a harvester, a rice transplanter, a vehicle for crop management, a vegetable transplanter, a mower, a seeder, a spreader, or the like. The area recognition system can also be applied to an agricultural machine other than a vehicle.

The embodiment described above is merely an example in all respects and the invention is not limited to the embodiment. The scope of the present invention is defined by the claims rather than the embodiment, and includes all modifications within the scope equivalent to the configurations defined in the claims.

### REFERENCE SIGNS LIST

- 7: area recognition system
- 10: work vehicle
- 11: vehicle body
- 35: camera (detection device)
- 36: LiDAR sensor (three-dimensional range sensor, detection device)
- 73: first discrimination processing control unit (first discrimination processor)
- 74: control unit for information acquisition (information acquisition part)
- 75: second discrimination processing control unit (second discrimination processor)
- 76: control unit for confirmation processing (confirmation processor)
- 77: control unit for position detection (position detector)
- i1: image information
- i2: three-dimensional point group data set
- i3: identification information
- K: detection surface

## Claims

1. An area recognition system comprising:
a first discrimination processor configured to discriminate whether an area is a road based on first information obtained by setting a surrounding area of a work vehicle as a detection target; and
a second discrimination processor configured to discriminate between a road and a non-road area by using identification information on a height or a width based on second information obtained for a range overlapping a range discriminated by using the first information.

2. The area recognition system according to claim 1, wherein
the first discrimination processor discriminates whether the area is a road by using a trained model based on the first information.

3. The area recognition system according to claim 1, wherein
the first information and the second information are different from each other.

4. The area recognition system according to claim 1, further comprising
an information acquisition part configured to acquire the identification information, wherein
when the identification information satisfies a discrimination condition related to a height or a width, the second discrimination processor discriminates that a portion discriminated as a road by the first discrimination processor is a non-road area.

5. The area recognition system according to claim 4, further comprising
a confirmation processor capable of confirming a position where the work vehicle is present is a road, wherein
the identification information includes information on a height of a portion discriminated as a road by the first discrimination processor, and
the discrimination condition includes a condition that a height of a portion discriminated as a road by the first discrimination processor is lower than a reference position of the work vehicle by more than a first threshold.

6. The area recognition system according to claim 4, further comprising
a confirmation processor capable of confirming a position where the work vehicle is present is a road, wherein
the identification information includes information on a height of a portion discriminated as a road by the first discrimination processor, and
the discrimination condition includes a condition that a height of a portion discriminated as a road by the first discrimination processor is higher than a reference position of the work vehicle by more than a second threshold.

7. The area recognition system according to claim 5 or 6, wherein
the confirmation processor is capable of confirming that a position where the work vehicle is present is a road by using information different from the first information and the second information or by using an algorithm different from an algorithm used by the first discrimination processor for discrimination.

8. The area recognition system according to claim 4, wherein
the second information includes a three-dimensional point group data set in a portion discriminated as a road by the first discrimination processor,
the identification information includes information of a value indicating variation in a height component of a three-dimensional point group data set, and
the discrimination condition includes a condition that the value indicating variation exceeds a range of a third threshold.

9. The area recognition system according to claim 4, wherein
the identification information includes information of a width dimension of a portion discriminated as a road by the first discrimination processor, and
the discrimination condition includes a condition that the width dimension exceeds a reference dimension.

10. The area recognition system according to any one of claims 1 to 3, wherein
the first discrimination processor discriminates whether the area is a road by using image information acquired by a camera as the first information.

11. The area recognition system according to claim 4, wherein
the information acquisition part
acquires a three-dimensional point group data set of a target area obtained by a three-dimensional range sensor, and
acquires, as the identification information, a height of a portion discriminated as a road by the first discrimination processor, using the three-dimensional point group data set.

12. The area recognition system according to any one of claims 1 to 3, wherein
the first discrimination processor discriminates whether the area is a road by using a three-dimensional point group data set acquired by a three-dimensional range sensor as the first information.

13. The area recognition system according to claim 5 or 6, further comprising
a position detector configured to detect a height of a reference position of the work vehicle.

14. The area recognition system according to claim 5 or 6, wherein
the confirmation processor
uses at least one of output information from an inertial measurement device mounted on the vehicle, information as a combination of position information for the vehicle obtained by a GNSS and map information, or work plan information for the vehicle in which work content and time are associated with each other.

15. A work vehicle comprising:
a vehicle body;
a detection device configured to detect a surrounding area of the vehicle body as a detection target; and
the area recognition system according to claim 1.
